(19) Europäisches Patentamt
European Patent Office
Office européen des brevets

(11) EP 4 046 820 A1

(12) EUROPEAN PATENT APPLICATION
published in accordance with Art. 153(4) EPC

(43) Date of publication:
**24.08.2022 Bulletin 2022/34**

(21) Application number: **20885292.1**

(22) Date of filing: **15.10.2020**

(51) International Patent Classification (IPC):
***B60C 1/00*** *(2006.01)* ***C08K 5/548*** *(2006.01)*
***C08L 9/00*** *(2006.01)* ***C08L 25/00*** *(2006.01)*
***C08L 45/02*** *(2006.01)* ***C08L 57/02*** *(2006.01)*
***B60C 11/00*** *(2006.01)* ***B60C 11/03*** *(2006.01)*
***C08K 3/36*** *(2006.01)*

(52) Cooperative Patent Classification (CPC):
**B60C 1/00; B60C 11/00; B60C 11/03; C08K 3/36; C08K 5/548; C08L 9/00; C08L 25/00; C08L 45/02; C08L 57/02**

(86) International application number:
**PCT/JP2020/038927**

(87) International publication number:
**WO 2021/090660 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2019 JP 2019201578**

(71) Applicant: **Sumitomo Rubber Industries, Ltd.**
**Kobe-shi, Hyogo 651-0072 (JP)**

(72) Inventor: **YAMADA, Ayuko**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **RUBBER COMPOSITION FOR TIRES, AND TIRE**

(57) Provided is a tire comprising a tread formed of a rubber composition comprising an isoprene-based rubber, silica, and a resin component and in which tan δ at 0°C (0°C tan δ) and tan δ at -20°C (-20°C tan δ) satisfy the following inequality (1) under a condition of an initial strain of 2%, a dynamic strain of 1%, and a frequency of 50Hz:

$$0.1 \leq |(-20°C \tan \delta) - (0°C \tan \delta)| \leq 0.3 \ldots (1).$$

EP 4 046 820 A1

FIG. 1

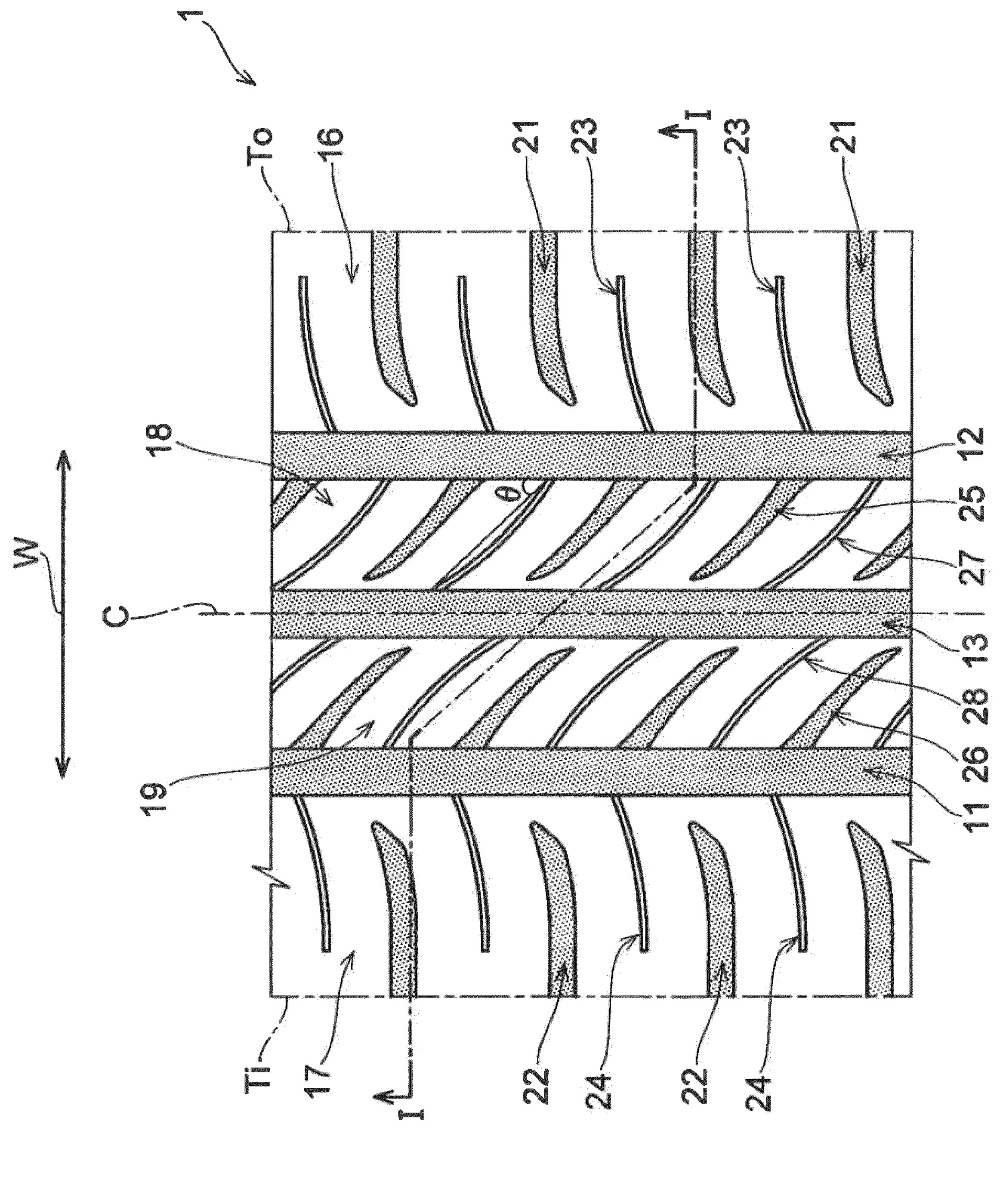

## Description

### TECHNICAL FIELD

The present invention relates to a tire having improved fuel efficiency, steering stability at high-speed running, and wet grip performance at high-speed running with a good balance.

### BACKGROUND ART

Improvement in fuel efficiency of a tire requires a low hysteresis loss (that is, a value of a tan δ is small), and improvement in wet grip performance requires a high wet skid resistance (that is, the value of the tan δ is large). As described above, the low hysteresis loss and the high wet skid resistance conflict with each other, and it is difficult to improve fuel efficiency and wet grip performance with good balance.

Patent Document 1 describes a rubber composition for tire having improved fuel efficiency, wet grip performance, and abrasion resistance by comprising specific resin and silica.

Also, amid a growing demand for fuel efficiency of tire, achieving steering stability at high-speed running and fuel efficiency at a high level has been desired.

### PRIOR ART DOCUMENT

#### Patent Document

Patent Document 1: JP 5559234 B

### SUMMARY OF THE INVENTION

#### PROBLEM TO BE SOLVED BY THE INVENTION

It is an object of the present invention to provide a tire having improved fuel efficiency, steering stability at high-speed running, and wet grip performance at high-speed running with a good balance.

#### MEANS TO SOLVE THE PROBLEM

As a result of intensive studies, the present inventor has found that, in a tire comprising a tread formed of a rubber composition comprising an isoprene-based rubber, silica, and a resin component and having a 0°C tan δ and a -20°C tan δ that are in predetermined ranges, fuel efficiency, steering stability at high-speed running, and wet grip performance at high-speed running are improved with a good balance. Moreover, the present inventor has found that, by setting an area of a circumferential groove/a grounding area and an area of a lateral groove/the grounding area of the tread to be in predetermined ranges, steering stability at high-speed running is further improved, and completed the present invention.

That is, the present invention relates to:

[1] A tire comprising a tread formed of a rubber composition,

wherein the rubber composition comprises an isoprene-based rubber, silica, and a resin component, and wherein a tan δ at 0°C (0°C tan δ) and a tan δ at -20°C (-20°C tan δ) satisfy the following inequality (1) under a condition of an initial strain of 2%, a dynamic strain of 1%, and a frequency of 50Hz:

$$0.1 \leq |(-20°\text{C} \tan\delta) - (0°\text{C} \tan\delta)| \leq 0.3 \quad \cdots (1),$$

[2] The tire of [1] above,

wherein the tread has circumferential grooves continuously extending in a tire circumferential direction, and lateral grooves extending in a width direction, and
wherein an area of the circumferential groove/a grounding area is 0.09 to 0.16 and an area of a lateral groove/the grounding area is 0.08 to 0.14,

[3] The tire of [1] or [2] above,
wherein the rubber composition comprises 50 parts by mass or more of silica and 1 part by mass or more of a resin component, based on 100 parts by mass of a rubber component comprising 10% by mass or more of an isoprene-based rubber,
[4] The tire of any one of [1] to [3] above,
wherein the rubber composition comprises 50 to 150 parts by mass of silica and 1 to 50 parts by mass of a resin component, based on 100 parts by mass of a rubber component comprising 10 to 85% by mass of an isoprene-based rubber, 10 to 85% by mass of a styrene-butadiene rubber, and 5 to 50% by mass of a butadiene rubber,
[5] The tire of any one of [1] to [4] above,
wherein the resin component comprises at least one or more selected from the group consisting of a coumarone-indene resin, an indene resin, an aromatic vinyl-based resin, and a C5-C9-based petroleum resin,
[6] The tire of any one of [1] to [5] above,
wherein the rubber composition comprises a silane coupling agent having a mercapto group.

EFFECTS OF THE INVENTION

In a tire of the present invention comprising a tread formed of a rubber composition comprising an isoprene-based rubber, silica, and a resin component and having a 0°C tan δ and a -20°C tan δ that are in predetermined ranges, fuel efficiency, steering stability at high-speed running, and wet grip performance at high-speed running are improved with a good balance. Moreover, by setting an area of a circumferential groove/a grounding area and an area of a lateral groove/the grounding area of the tread to be in predetermined ranges, steering stability at high-speed running is further improved.

BRIEF DESCRIPTION OF THE DRAWINGS

FIG. 1 is a schematic view of a grounding surface of a tire when a tread is pressed against a flat surface.

EMBODIMENT FOR CARRYING OUT THE INVENTION

A tire according to one embodiment of the present disclosure is a tire comprising a tread formed of a rubber composition comprising an isoprene-based rubber, silica, and a resin component, wherein a tan δ at 0°C (0°C tan δ) and a tan δ at -20°C (-20°C tan δ) satisfy the following inequality (1) under a condition of an initial strain of 2%, a dynamic strain of 1%, and a frequency of 50Hz:

$$0.1 \leq |(-20°C \tan\delta) - (0°C \tan\delta)| \leq 0.3 \quad \cdots (1)$$

The rubber composition of the tread (rubber composition for tread) preferably comprises 50 to 150 parts by mass of silica and 1 to 50 parts by mass of a resin component based on 100 parts by mass of a rubber component comprising 10 to 85% by mass of an isoprene-based rubber, 10 to 85% by mass of a styrene-butadiene rubber, and 5 to 50% by mass of a butadiene rubber.

The tread has circumferential grooves continuously extending in a tire circumferential direction and lateral grooves extending in a width direction, and an area of the circumferential groove/a grounding area is 0.09 to 0.16 and an area of a lateral groove/the grounding area is 0.08 to 0.14.

A procedure for producing a tire comprising a rubber composition for tread that is one embodiment of the present disclosure is described below in detail. However, the following descriptions are illustrative for explaining the present disclosure, and are not intended to limit the technical scope of the present invention to this description range only. Besides, in the present specification, a numerical range identified with "to" means to include the numerical values of both ends.

[Rubber composition for tread]

For a tire according to the present disclosure, a tread is formed of a rubber composition comprising an isoprene-based rubber, silica, and a resin component, wherein a tan δ at 0°C (0°C tan δ) and a tan δ at -20°C (-20°C tan δ) satisfy the following inequality (1) under a condition of an initial strain of 2%, a dynamic strain of 1%, and a frequency of 50Hz:

$$0.10 \leq |(-20°C \tan\delta) - (0°C \tan\delta)| \leq 0.30 \quad \cdots (1)$$

When the tan δ of the rubber composition (rubber composition for tread) of the tread satisfies the requirement of the above-described inequality (1), the obtained tire becomes improved in fuel efficiency, steering stability at high-speed running, and wet grip performance at high-speed running with a good balance. The reason for that is considered as follows although the following consideration is not intended to be bound by any theory. The -20°C tan δ is a wet grip index at high-speed running. Also, the 0°C tan δ is a wet grip index at running on an ordinary road. It is considered that fuel efficiency, wet grip performance, and steering stability at high-speed running can be secured by setting these values to be suitable ones while reducing temperature dependencies of these values. Also, a rubber composition comprising an isoprene-based rubber as a main constituent and in which silica is highly dispersed is relatively flexible and particularly susceptible to vibration occurring at high-speed running, and it is considered that it was possible to improve steering stability. The value of (|(-20°C tan δ) - (0°C tan δ)|) in the above-described inequality (1) is preferably 0.12 or more, more preferably 0.14 or more, further preferably 0.15 or more, particularly preferably 0.17 or more. Also, the value in the above-described inequality (1) is preferably 0.28 or less, more preferably 0.26 or less.

Although the rubber composition for tread according to the present disclosure is not particularly limited as long as the rubber composition according to the present disclosure is a rubber composition comprising an isoprene-based rubber, silica, and a resin component and having the above-described physical properties, a rubber composition is preferably used which comprises 50 parts by mass or more of silica and 1 part by mass or more of a resin component ,based on 100 parts by mass of a rubber component comprising 10% by mass or more of an isoprene-based rubber.

<Rubber component>

The rubber composition for tread according to the present disclosure comprises an isoprene-based rubber as a rubber component. Also, the rubber composition according to the present disclosure preferably comprises a styrene-butadiene rubber (SBR) and a butadiene rubber (BR).

<Isoprene-based rubber>

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 10% by mass or more, more preferably 20% by mass or more, further preferably 30% by mass or more, particularly preferably 40% by mass or more, from the viewpoints of fuel efficiency and abrasion resistance. On the other hand, an upper limit of the content of the isoprene-based rubber in the rubber component is, but not particularly limited to, preferably 85% by mass or less, more preferably 80% by mass or less, further preferably 75% by mass or less, particularly preferably 70% by mass or less, from the viewpoint of wet grip performance.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable, from the viewpoint that fuel efficiency and abrasion resistance can be well improved. Furthermore, hydrogenated ones of these SBRs (hydrogenated SBRs) and the like can also be used. These SBRs may be used alone, or two or more thereof may be used in combination.

Examples of S-SBRs that can be used in the present disclosure include S- SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 15% by mass or more, more preferably 20% by mass or more, from the viewpoints of wet grip performance and abrasion resistance. Moreover, it is preferably 60% by mass or less, more preferably 50% by mass or less, from the viewpoints of temperature dependency of grip performance and of abrasion resistance. Besides, in the present specification, the styrene content of the SBR is calculated by $^1$H-NMR measurement.

A vinyl bonding amount of the SBR is preferably 10 mol% or more, more preferably 13 mol% or more, further

preferably 16 mol% or more, from the viewpoints of ensuring reactivity with silica, rubber strength, and abrasion resistance. Moreover, the vinyl bonding amount of the SBR is preferably 70 mol% or less, more preferably 65 mol% or less, further preferably 60 mol% or less, from the viewpoints of prevention of increase in temperature dependency, wet grip performance, elongation at break, and abrasion resistance. Besides, in the present specification, the vinyl bonding amount of the SBR (1,2-bond butadiene unit amount) is measured by infrared absorption spectrometry.

A weight-average molecular weight (Mw) of the SBR is preferably 250,000 or more, more preferably 500,000 or more, further preferably 1,000,000 or more, from the viewpoint of abrasion resistance. Moreover, the Mw is preferably 2,500,000 or less, more preferably 2,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMALTIPORE HZ-M manufactured by Tosoh Corporation).

A content of the SBR when compounded in the rubber component is preferably 10% by mass or more, more preferably 15% by mass or more, further preferably 20% by mass or more, particularly preferably 30% by mass or more, from the viewpoint of wet grip performance. Moreover, it is preferably 85% by mass or less, more preferably 80% by mass or less, further preferably 75% by mass or less, particularly preferably 70% by mass or less, from the viewpoint of abrasion resistance.

(BR)

The BR is not particularly limited, and those common in the tire industry can be used such as, for example, a BR having a cis-1,4 bond content of less than 50% (a low cis BR), a BR having a cis-1, 4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

Examples of the high cis BR include, for example, BR1220 manufactured by Zeon Corporation, BR130B, BR150B, BR150L manufactured by Ube Industries, Ltd., BR730 manufactured by JSR Corporation, and the like. When the high cis BR is compounded, low temperature characteristics and abrasion resistance can be improved. Examples of the rare-earth-based BR include, for example, BUNA-CB25 manufactured by LANXESS, and the like.

Examples of the SPB-containing BR include those in which 1,2-syndiotactic polybutadiene crystal is chemically bonded with BR and dispersed, but not those in which the crystal is simply dispersed in the BR. Examples of such SPB-containing BR include VCR-303, VCR-412, VCR-617 manufactured by Ube Industries, Ltd, and the like.

Examples of modified BRs include those obtained by adding a tin compound after polymerizing 1,3-butadiene by a lithium initiator, and further in which the terminal of the modified BR molecules has tin-carbon bond (a tin-modified BR), a butadiene rubber having a condensed alkoxysilane compound at its active terminal (a modified BR for silica), and the like. Examples of such modified BRs include, for example, BR1250H (tin-modified) manufactured by ZS Elastomer Co., Ltd., a S-modified polymer (modified for silica), and the like.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMALTIPORE HZ-M manufactured by Tosoh Corporation).

A content of the BR when compounded in the rubber component is preferably 5% by mass or more, more preferably 10% by mass or more, further preferably 15% by mass or more, from the viewpoint of abrasion resistance. Moreover, it is preferably 40% by mass or less, more preferably 35% by mass or less, further preferably 30% by mass or less, particularly preferably 25% by mass or less, from the viewpoint of wet grip performance.

(Other rubber components)

As the rubber components according to the present disclosure, rubber components other than the above-described isoprene-based rubber, SBRs and BRs may be compounded. As other rubber components, crosslinkable rubber components commonly used in the rubber industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene-propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

The rubber composition for tread according to the present disclosure comprises silica as a filler. Also, it preferably comprises carbon black.

(Silica)

When the rubber composition for tread according to the present disclosure comprises silica, fuel efficiency, abrasion resistance, and steering stability at high-speed running can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These types of silica may be used alone, or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, particularly preferably 170 $m^2/g$, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

An average primary particle size of silica is preferably 20 nm or less, more preferably 18 nm or less, further preferably 16 nm or less. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be more improved, and reinforcing property, fracture characteristics, and abrasion resistance can be further improved. Besides, the average primary particle size of silica can be calculated by observing silica with a transmission or scanning electron microscope, measuring 400 or more primary particles of silica observed in the field of view, and averaging them.

A content of silica based on 100 parts by mass of the rubber component is preferably 50 parts by mass or more, more preferably 55 parts by mass or more, further preferably 60 parts by mass or more, from the viewpoint of improving fuel efficiency and steering stability at high-speed running. Moreover, it is preferably 150 parts by mass or less, more preferably 130 parts by mass or less, further preferably 110 parts by mass or less, from the viewpoint of suppressing decreases in fuel efficiency and abrasion resistance due to deterioration of silica dispersibility in a rubber.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and, besides these types, in-house synthesized products and the like can also be appropriately used. These types of carbon black may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and durability. Besides, the $N_2SA$ of carbon black in the present specification is a value measured according to JIS K 6217-2 "Carbon black for rubber-Fundamental characteristics-Part 2: Determination of specific surface area-Nitrogen adsorption methods-Single-point procedures" A Method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, from the viewpoint of fuel efficiency.

(Other fillers)

As fillers other than silica and carbon black, those conventionally and commonly used in the rubber industry can be compounded, such as aluminum hydroxide, calcium carbonate, alumina, clay, and talc.

A content of silica in 100% by mass of silica and carbon black in total is preferably 50% by mass or more, more preferably 60% by mass or more, further preferably 70% by mass or more, particularly preferably 80% by mass or more. Also, the content of silica is preferably 99% by mass or less, more preferably 97% by mass or less, further preferably 95% by mass or less.

A total content of silica and carbon black based on 100 parts by mass of the rubber component is preferably 60 parts by mass or more, more preferably 70 parts by mass or more, further preferably 80 parts by mass or more, from the viewpoint of abrasion resistance. Moreover, it is preferably 180 parts by mass or less, more preferably 160 parts by mass or less, further preferably 140 parts by mass or less, from the viewpoint of suppressing prevention of decreases in fuel efficiency and abrasion resistance.

(Silane coupling agent)

Silica is preferably used in combination with a silane coupling agent. The silane coupling agent is not particularly limited, and any silane coupling agents conventionally used in combination with silica in the rubber industry can be used, and the rubber composition preferably comprises a silane coupling agent having a mercapto group.

It is preferable that the silane coupling agent having a mercapto group is a compound represented by the following formula (1) and/or a compound comprising a bond unit A represented by the following formula (2) and a bond unit B represented by the following formula (3).

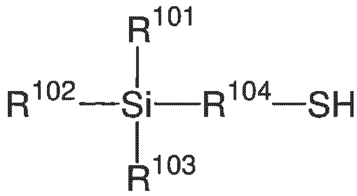

(1)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$s each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

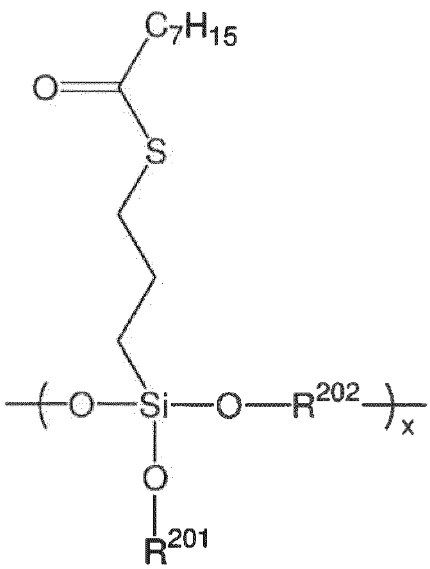

(2)

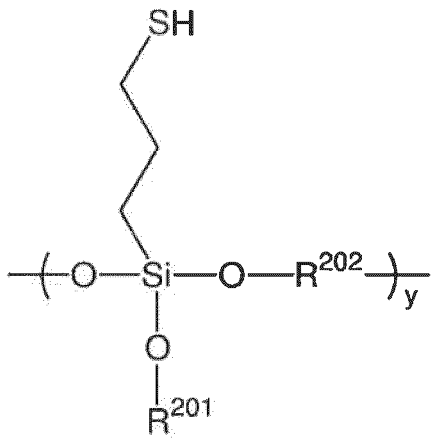

(3)

(wherein, x represents an integer of 0 or more; y represents an integer of 1 or more; $R^{201}$ represents hydrogen atom , or an alkyl having 1 to 30 carbon atoms, an alkenyl having 2 to 30 carbon atoms, or an alkynyl having 2 to 30 carbon atoms, each of the alkyl, the alkenyl and the alkynyl optionally being substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone, or two or more thereof may be used in combination.

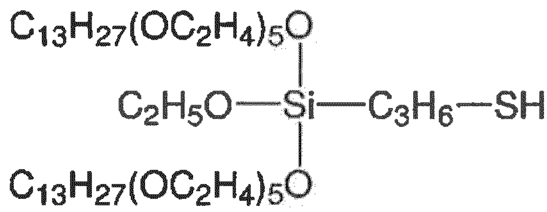

(4)

In the compound comprising the bond unit A represented by the formula (2) and the bond unit B represented by the formula (3), an increase in viscosity during processing is suppressed compared with a sulfide-based silane coupling agent such as bis-(3-triethoxysilylpropyl)tetrasulfide. Therefore, silica dispersibility becomes better, and fuel efficiency, wet grip performance, and elongation at break tend to be further improved. It is considered that this is because a sulfide part of the bond unit A is a C-S-C bond and thus is thermally stable as compared with tetrasulfide or disulfide, thereby resulting in a small increase in Mooney viscosity.

A content of the bond unit A is preferably 30 to 99 mol%, more preferably 50 to 90 mol%, from the viewpoint of suppressing an increase in viscosity during processing. Moreover, a content of the bond unit B is preferably 1 to 70 mol%, more preferably 5 to 65 mol%, further preferably 10 to 55 mol%. Furthermore, a total content of the bond units A and B is preferably 95 mol% or more, more preferably 98 mol% or more, particularly preferably 100 mol%. Besides, the content of the bond units A and B is an amount including a case where the bond units A and B are located at the terminal of the silane coupling agent. A form where the bond units A and B are located at the terminal of the silane coupling agent is not particularly limited, as long as it forms a unit corresponding to the formula (2) and the formula (3) representing the bond units A and B.

In a compound comprising the bond unit A represented by the formula (2) and the bond unit B represented by the formula (3), a total number of repetitions (x + y) of the number of repetitions of the bond unit A (x) and the number of repetitions of the bond unit B (y) is preferably in a range of 3 to 300. Within this range, mercaptosilane of the bond unit B is covered with $-C_7H_{15}$ of the bond unit A, so that shortening of scorch time can be suppressed, and a good reactivity with silica and rubber components can be secured.

Examples of the compound comprising the bond unit A represented by the formula (2) and the bond unit B represented by the formula (3) include, for example, NXT-Z30, NXT-Z45, NXT-Z60, and NXT-Z100 manufactured by Momentive Performance Materials, and the like. They may be used alone, or two or more thereof may be used in combination.

Silane coupling agents other than the above-described silane coupling agent having a mercapto group may

be used as a silane coupling agent. Examples of other silane coupling agents include, for example, silane coupling agents having a sulfide group such as bis(3-triethoxysilylpropyl)disulfide and bis(3-triethoxysilylpropyl)tetrasulfide; silane coupling agents having a vinyl group such as vinyltriethoxysilane and vinyltrimethoxysilane; silane coupling agents having an amino group such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane, and the like. These silane coupling agents may be used alone, or two or more thereof may be used in combination.

A content of the silane coupling agent (preferably, the silane coupling agent having a mercapto group) when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of improving dispersibility of silica. Moreover, it is preferably 20 parts by mass or less, more preferably 12 parts by mass or less, further preferably 10 parts by mass or less, particularly preferably 9.0 parts by mass or less, from the viewpoint of preventing decrease in abrasion resistance.

<Resin component>

The rubber composition for tread according to the present disclosure comprises a resin component. Examples of the resin component include, but not particularly limited to, a petroleum resin, a terpene-based resin, a rosin-based resin, a phenol-based resin, and the like, which are commonly used in the tire industry. These types of resin may be used alone, or two or more thereof may be used in combination.

Examples of the petroleum resin include, for example, a C5-based petroleum resin, an aromatic petroleum resin, and a C5-C9-based petroleum resin.

In the present specification, the "C5-based petroleum resin" means a resin obtained by polymerizing C5 fractions. Examples of C5 fractions include, for example, a petroleum fraction having 4 to 5 carbon atoms, such as cyclopentadiene, pentene, a pentadiene, and isoprene. A dicyclopentadiene resin (DCPD resin) is appropriately used as a C5-based petroleum resin.

In the present specification, the "aromatic petroleum resin" means a resin obtained by polymerizing C9 fractions and may be those undergoing hydrogenation or modification. Examples of C9 fractions include, for example, a petroleum fraction having 8 to 10 carbon atoms, such as a vinyltoluene, an alkylstyrene, indene, and a methylindene. As specific example of aromatic petroleum resins, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and good in wet grip performance. As the aromatic vinyl-based resin, for example, commercially available products such as SYLVARES SA85, SA100, SA120, SA140 manufactured by Kraton Corporation, R2336 manufactured by Eastman Chemical Company, and the like are appropriately used.

In the present specification, the "C5-C9-based petroleum resin" means a resin obtained by polymerizing the C5 fractions and the C9 fractions and may be those undergoing hydrogenation or modification. Examples of C5 fractions include, for example, a petroleum fraction having 4 to 5 carbon atoms, such as cyclopentadiene, pentene, a pentadiene, and isoprene. As the C5-C9-based petroleum resin, for example, commercially available products such as PGR-80 and PGR-140 manufactured by LUHUA Chemical Co., Ltd., G-100 manufactured by Qilong Chemical Co., Ltd., and PETROTACK (Registered Trademark) 60, PETROTACK 70, PETROTACK 90, PETROTACK 100, PETROTACK 100V, and PETROTACK 90HM manufactured by Tosoh Corporation are appropriately used.

Examples of the terpene-based resin include, but not particularly limited to, for example, a polyterpene resin, a terpene phenol resin, a terpene styrene resin, and the like. The polyterpene resin is a resin made from at least one selected from terpene compounds such as an α-pinene, a β-pinene, a limonene, and a dipentene. The terpene phenol resin is a resin made from the terpene compounds and phenol-based compounds. The terpene styrene resin is a resin made from the terpene compounds and styrene. The polyterpene resin and the terpene styrene resin may be a resin subjected to hydrogenating treatment (hydrogenated polyterpene resin, hydrogenated terpene styrene resin). The hydrogenating treatment for the terpene-based resin can be performed in a well-known manner, or a commercially available hydrogenated resin can be used.

Examples of the rosin-based resin include, but not particularly limited to, for example, a natural rosin resin, a rosin-modified resin obtained by modifying the natural rosin resin by hydrogenation, disproportionation, dimerization or esterification, and the like.

Examples of the phenol-based resin include, but not particularly limited to, for example, a phenol formaldehyde resin, an alkylphenol formaldehyde resin, an alkyl phenol acetylene resin, an oil-modified phenol formaldehyde resin,

and the like.

It is preferable to use, as the resin component, at least one selected from the group consisting of a coumarone-indene resin, an indene resin, an aromatic vinyl-based resin, and a C5-C9-based petroleum resin, from the viewpoint that fuel efficiency and wet grip performance can be obtained with a good balance.

A softening point of the resin component is preferably 160°C or lower, more preferably 145°C or lower, further preferably 130°C or lower, from the viewpoint of abrasion resistance. Moreover, the softening point is preferably 50°C or higher, more preferably 60°C or higher, further preferably 70°C or higher, from the viewpoint of wet grip performance. Moreover, the resin component may be a resin component that does not substantially comprise any liquid resin having a softening point of -20 to 45°C (for example, less than 0.5 parts by mass, preferably less than 0.1 parts by mass, based on 100 parts by mass of the rubber component) or may be a resin component that does not comprrise any liquid resin having a softening point of -20 to 45°C (that is, 0 part by mass). Besides, the softening point of the resin component in the present disclosure is a temperature at which a sphere drops when the softening point specified in JIS K 6220-1: 2015 is measured with a ring and ball softening point measuring device.

A content of the resin component based on 100 parts by mass of the rubber component is preferably 1 part by mass or more, more preferably 3 parts by mass or more, further preferably 5 parts by mass or more, particularly preferably 7 parts by mass or more, from the viewpoint of wet grip performance. Moreover, it is preferably 50 parts by mass or less, more preferably 40 parts by mass or less, further preferably 30 parts by mass or less, particularly preferably 25 parts by mass or less, from the viewpoints of fuel efficiency and abrasion resistance. When the content of the resin component is increased, the value of the 0°C tan $\delta$ tends to increase.

<Other compounding agents>

The rubber composition for tread according to the present disclosure can appropriately comprise compounding agents conventionally and commonly used in the tire industry, such as, for example, oil, wax, processing aid, an antioxidant, stearic acid, zinc oxide, a vulcanizing agent such as sulfur, and a vulcanization accelerator, in addition to the above-described components.

Examples of oil include, for example, mineral oils such as aromatic oils, process oils, and paraffin oils, and the like. Among them, it is preferable to use process oils because they reduce burden on the environment.

A content of oil when compounded based on 100 parts by mass of the rubber component is preferably 10 part by mass or more, more preferably 15 parts by mass or more, further preferably 20 parts by mass or more, from the viewpoint of wet grip performance. Moreover, it is preferably 80 parts by mass or less, more preferably 70 parts by mass or less, further preferably 60 parts by mass or less, from the viewpoints of fuel efficiency and steering stability at high-speed running. When the content of oil is increased, the value of the 0°C tan $\delta$ tends to increase. Besides, in the present specification, the content of oil also includes an amount of oil contained in an oil-extended rubber.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. They may be used alone, or two or more thereof may be used in combination. Among them, a fatty acid metal salt, an amide ester, and a mixture of a fatty acid metal salt and an amide ester or a fatty acid amide are preferable, and a mixture of a fatty acid metal salt and a fatty acid amide is particularly preferable. Specifically, examples of such processing aid include, for example, a fatty acid soap-based processing aid such as EF44 and WB16 manufactured by Schill + Seilacher.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, each amine-based, quinoline-based, quinone-based, phenol-based, and imidazole-based compound, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diallyl-p-phenylenediamine, phenylhexyl-p-phenylenediamine, and phenyloctyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more

thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

A content of sulfur when compounded as a vulcanizing agent based on 100 parts by mass of the rubber component is preferably 0.5 parts by mass or more, more preferably 1.0 part by mass or more, from the viewpoints of securing a sufficient vulcanization reaction and obtaining good grip performance and abrasion resistance. Moreover, it is preferably 3.0 parts by mass or less, more preferably 2.5 parts by mass or less, further preferably 2.0 parts by mass or less, from the viewpoint of prevention of deterioration.

Examples of vulcanizing agents other than sulfur include, for example, vulcanizing agents comprising a sulfur atom such as TACKIROL V200 manufactured by Taoka Chemical Co., Ltd., DURALINK HTS (sodium hexamethylene-1,6-bisthiosulfate dihydrate) manufactured by Flexsys, and KA9188 (1,6-bis(N,N'-dibenzylthiocarbamoyldithio)hexane) manufactured by LANXESS, organic peroxides such as dicumyl peroxide, and the like.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and guanidine-based vulcanization accelerators are preferable, and it is more preferable to use two of them in combination, from the viewpoint that desired effects can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. These vulcanization accelerators may be used alone, or two or more thereof may be used in combination.

A content of a vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present disclosure can be produced by a known method. For example, it can be produced by a method of kneading components other than vulcanizing agents and vulcanization accelerators, of the above-described components, with a known kneading machine used in the general rubber industry such as a Banbury mixer, a kneader, and an open roll, then adding the vulcanizing agents and the vulcanization accelerators to the mixture to further knead them, and then vulcanizing them, and the like.

[Tire]

The tire according to the present disclosure comprises a tread formed of the above-described rubber composition for tread, and examples of such a tire include a tire for a passenger car, a tire for a truck/bus, a tire for a two-wheeled vehicle, a high-performance tire, and the like. Besides, the high-performance tire in the present specification is a tire particularly excellent in grip performance and is a concept also including a racing tire used for a racing vehicle.

The tire comprising a tread formed of the above-described rubber composition for tread can be produced by a usual method using the above-described rubber composition for tread. That is, the tire can be produced by extruding an unvulcanized rubber composition, obtained by compounding each of the above-described components based on the rubber component as necessary, into a tread shape, attaching it together with other tire members on a tire forming machine, and molding them by a usual method to form an unvulcanized tire, followed by heating and pressurizing this

unvulcanized tire in a vulcanizing machine.

FIG. 1 shows a schematic view of a grounding surface when a tread is pressed against a flat surface. As shown in FIG. 1, a tread 1 of the tire of the present disclosure has circumferential grooves 11, 12, and 13 continuously extending in a tire circumferential direction C (linearly extending along he tire circumferential direction, in the example of FIG. 1) and lateral groves 21 to 28 (sipes and lug grooves) extending in a width direction, and when the tire is rim-assembled on a standardized rim and, in a standardized state with a standardized internal pressure being filled and no load being applied, is pressed against a flat surface with a standardized load being applied, it is preferable that a ratio of grounding areas of the circumferential grooves to the grounding area of the tread 1 (circumferential groove areas/grounding area) is 0.09 to 0.16, and it is preferable that a ratio of grounding areas of the lateral grooves to the grounding area of the tread 1 (lateral groove areas/grounding area) is 0.08 to 0.14.

By setting the ratios of the circumferential groove areas to the grounding area and of the lateral groove areas to the grounding area to be within the above-described ranges, rigidity of a land part of the tread can be increased, and with a synergetic effect with the rubber flexibility of the rubber composition for tread according to the present disclosure, rolling resistance can be improved while exhibiting a high steering stability at high-speed running. In a case where the circumferential groove areas/grounding area is less than 0.09 or the lateral groove areas/grounding area is less than 0.08, a ratio of the land part becomes too high, and thus drainage performance and grip performance tend to deteriorate. On the other hand, in a case where the circumferential groove areas/grounding area exceeds 0.16 or the lateral groove areas/grounding area exceeds 0.14, a sufficient rigidity of the land part of the tread cannot be obtained, and thus steering stability tends to deteriorate. It is more preferable that the circumferential groove areas/grounding area is 0.10 to 0.14, and it is more preferable that the lateral groove areas/grounding area is 0.09 to 0.12.

The "standardized rim" is a rim defined for each tire in a standard system including a standard, on which the tire is based, by the standard, for example, a "standard rim" in JATMA, "Design Rim" in TRA, or "Measuring Rim" in ETRTO.

The "standardized internal pressure" is an air pressure defined for each tire by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The "standardized load" is a load defined for each tire by the standard, i.e., a maximum load capacity in JATMA, a maximum value described in Table "TIRE LOAD LIMITS AT VARIOUS COLD INFLATION PRESSURES" in TRA, or "LOAD CAPACITY" in ETRTO.

The tread 1 has circumferential grooves 11, 12, and 13 continuously extending in the circumferential direction C. In FIG. 1, the three circumferential grooves 11, 12, and 13 are provided. However, the number of the circumferential grooves is not particularly limited and may be, for example, 2 to 5. Also, although the circumferential grooves 11, 12, and 13 linearly extend along the circumferential direction C in the present disclosure, the circumferential grooves may extend in a zigzag shape along the circumferential direction C.

The tread 1 has a pair of shoulder land parts 16 and 17 partitioned by the circumferential grooves 11, 12 and 13 in the width direction W and center land parts 18 and 19 located between the pair of the shoulder land parts 16 and 17.

The shoulder land parts 16 and 17 are land parts provided at both ends in the width direction W in a tread part 2. In the present disclosure, the outer shoulder land part 16 is provided on an outside of a vehicle in the width direction W and the inner shoulder land part 17 is provided on an inside of the vehicle in the width direction W. In the present disclosure, the outer shoulder land part 16 is a land part formed between a circumferential main groove 12 located on the outermost side at the time of mounting the tire to the vehicle and an outer tread end To. The inner shoulder land part 17 is a land part formed between a circumferential main groove 11 located on the innermost side at the time of mounting the tire to the vehicle and an inner tread end Ti.

The shoulder land parts 16 and 17 are provided with shoulder lug grooves 21 and 22 extending in a direction traversing the shoulder land parts 16 and 17, and shoulder sipes 23 and 24. The shoulder lug grooves 21 and 22 and the shoulder sipes 23 and 24 are provided on the pair of the shoulder land parts 16 and 17, respectively. Besides, in the present specification, the shoulder lug groove and the shoulder sipe provided on the outer shoulder land part 16 are referred to as an outer shoulder lug groove 21 and an outer shoulder sipe 23, respectively. Also, the shoulder lug groove and the shoulder sipe provided on the inner shoulder land part 17 are referred to as an inner shoulder lug groove 22 and an inner shoulder sipe 24, respectively.

Besides, in the present specification, the term "groove", including the lug grooves, means a hollow having a width larger than at least 2.0 mm. On the other hand, in the present specification, the term "sipe" means a narrow notch having a width of 2.0 mm or less, preferably 0.5 to 2.0 mm.

The center land parts 18 and 19 are land parts provided on a central part in the width direction W of the tread part 2. In the present disclosure, two center land parts 18 and 19 are provided between the outer shoulder land part 16 and the inner shoulder land part 17 (between the circumferential main groove 12 and the circumferential main groove 11). Besides, the number of the center land parts is not particularly limited and may be one or more than one. In the present disclosure, an outer center land part 18 is provided on the outside of the vehicle in the central part of the tread part 2, and an inner center land part 19 is provided on the inside of the vehicle in the central part of the tread part 2. In

the present disclosure, the outer center land part 18 is a land part formed between a circumferential main groove 13 provided along a tire equator C and the circumferential main groove 12 located on the outermost side at the time of mounting the tire to the vehicle. The inner center land part 19 is a land part formed between the circumferential main groove 13 provided along the tire equator C and the circumferential main groove 11 located on the innermost side at the time of mounting the tire to the vehicle.

The center land parts 18 and 19 are provided with center lug grooves 25 and 26 extending in a direction traversing the center land parts 18 and 19, and center sipes 27 and 28. The center lug grooves 25 and 26 and the center sipes 27 and 28 are provided on the center land parts 18 and 19, respectively. Besides, in the present specification, the center lug groove and the center sipe provided on the outer center land part 18 are referred to as an outer center lug groove 25 and an outer center sipe 27, respectively. Also, the center lug groove and the center sipe provided on the inner center land part 19 are referred to as an inner center lug groove 26 and an inner center sipe 28, respectively.

Also, in the present disclosure, as shown in FIG. 1, the sipes 27 and 28 of the center land parts 18 and 19 extend to connect both edge parts in the width direction W of the center land parts 18 and 19. Although angles of the sipes 27 and 28 of the center land parts 18 and 19 are not particularly limited, it is preferable that an angle $\theta$ between a straight line connecting both ends in the width direction W of the sipes 27 and 28 of the center land parts 18 and 19 and the circumferential main groove 12 is, for example, in a range of 60 to 80 degrees. In this case, a water layer can be scooped out in the center land parts 18 and 19, and braking performance on a wet road surface can be improved.

Although angles of the lug grooves 25 and 26 of the center land parts 18 and 19 are not particularly limited, it is preferable that an angle $\theta$ between a straight line connecting the both ends in the width direction W of the lug grooves 25 and 26 of the center land parts 18 and 19 and the circumferential main groove 12 is, for example, in a range of 60 to 80 degrees. Also, angles of the shoulder lug grooves 21 and 22 and the shoulder sipes 23 and 24 are not particularly limited, and, for example, it is preferable that these shoulder lug grooves and shoulder sipes are formed at an angle of 0 to 20 degrees relative to the circumferential direction C.

## EXAMPLE

Hereinafter, the present invention will be described based on Examples, though the present invention is not limited to these Examples only.

Various chemicals used in Examples and Comparative examples are collectively shown below.

NR: TSR20

SBR1: Modified solution-polymerized SBR produced in Production example 1 which will be described later (styrene content: 30% by mass, vinyl bond amount: 52 mol%, Mw: 250,000, a non-oil-extended product)

SBR2: Modified solution-polymerized SBR produced in Production example 2 which will be described later (styrene content: 35% by mass, vinyl bond amount: 50 mol%, Mw: 700,000, a non-oil-extended product)

BR: UBEPOL BR (Registered Trademark) 150B manufactured by Ube Industries, Ltd. (vinyl bond amount: 1.5 mol%, cis 1,4 bond content: 97%, Mw: 440,000)

Carbon black: DIABLACK N220 manufactured by Mitsubishi Chemical Corporation ($N_2SA$: 115 $m^2/g$)

Silica 1: Ultrasil (Registered Trademark) VN3 manufactured by Evonik Degussa GmbH ($N_2SA$: 175 $m^2/g$, average primary particle size: 17 nm)

Silica 2: Ultrasil (Registered Trademark) 9000GR manufactured by Evonik Degussa GmbH ($N_2SA$: 210 $m^2/g$, average primary particle size: 16 nm)

Silane coupling agent: NXT-Z45 manufactured by Momentive Performance Materials (silane coupling agent having a mercapto group, a copolymer of a bond unit A and a bond unit B (bond unit A: 55 mol%, bond unit B: 45 mol%))

Resin 1: Sylvares SA85 manufactured by Kraton Corporation (copolymer of $\alpha$-methylstyrene and styrene, softening point: 85°C)

Resin 2: PETROTACK 100V manufactured by Tosoh Corporation (C5-C9-based petroleum resin, softening point: 96°C)

Resin 3: Coumarone V-120 manufactured by NITTO CHEMICAL CO.,LTD. (coumarone-indene resin, softening point: 120°C)

Oil: Process Oil A/O MIX manufactured by SANKYO YUKA KOGYO K.K.

Wax: OZOACE 0355 manufactured by Nippon Seiro Co., Ltd.

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly (2,2,4-trimethyl-1,2-dihydroquinoline))
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

Production example 1: Synthesis of SBR1

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by steam stripping and dried by a heat roll whose temperature was adjusted to 110°C to obtain a SBR1.

Production example 2: Synthesis of SBR2

Cyclohexane, tetrahydrofuran, styrene, and ethylene glycol diethyl ether were put into an autoclave reactor subjected to nitrogen purge. After adjusting temperature of contents in the reactor to 20°C, bis(diethylamino)methylvinylsilane and n-butyllithium were put as a cyclohexane solution and a n-hexane solution, respectively, to initiate polymerization. Under a condition that a stirring speed is 130 rpm and a temperature inside the reactor is 65°C, copolymerization of 1,3-butadiene and styrene was performed for three hours while continuously supplying monomers into the reactor. Next, a polymer solution thus obtained was stirred at a stirring speed of 130 rpm, and N-(3-dimethylaminopropyl)acrylamide was added to perform reaction for 15 minutes. After completion of the polymerization reaction, 2,6-di-tert-butyl-p-cresol was added. Next, the mixture was subjected to removal of solvent by steam stripping and dried by a heat roll whose temperature was adjusted to 110°C to obtain a SBR2.

(Examples and Comparative examples)

According to the compounding formulations shown in Table 1, using a 1.7 L closed Banbury mixer, all chemicals other than sulfur and vulcanization accelerators were kneaded until reaching a discharge temperature at 150°C to 160°C for 1 to 10 minutes to obtain a kneaded product. Next, using a twinscrew open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test rubber composition.
Moreover, the above-described unvulcanized rubber composition was extruded into a shape of a tire tread with an extruder equipped with a mouthpiece having a predetermined shape and attached together with other tire members, thereby forming an unvulcanized tire, and the unvulcanized tire was press-vulcanized under a condition of 170°C for 12 minutes to produce and prepare a test tire (size: 155/65R14, rim: 14 × 4.5, internal pressure: 220 kPa).
The obtained test rubber composition and test tire were evaluated as follows. Table 1 shows evaluation results.

<Fuel efficiency>

A strip test piece having a width of 4 mm, a length of 20 mm, and a thickness of 2 mm was punched out from a sheet-shaped vulcanized rubber composition and provided for a test. Using a spectrometer manufactured by Ueshima Seisakusho Co., Ltd., a tan δ at 20°C (20°C tan δ) and a tan δ at -20°C (-20°C tan δ) were measured under a condition of an initial strain of 2%, a dynamic strain of 1%, and a frequency of 50 Hz. Moreover, an inverse value of the 20°C tan δ was indicated as an index with Comparative example 4 being 100 (fuel efficiency index). The larger the numerical value is, the smaller the rolling resistance is, which means that fuel efficiency is good. Besides, a performance target value shall be 90 or more, preferably 92 or more, more preferably 95 or more.

$$(\text{Fuel efficiency index}) = (\text{Tan } \delta \text{ of Comparative example 4}) / (\text{Tan } \delta \text{ of each compounding}) \times 100$$

<Steering stability at high-speed running>

Each test tire was mounted on all wheels of a domestic FF vehicle with a displacement of 660 cc, and the FF vehicle was run on a test course with a dry asphalt road surface. Handling characteristics were evaluated based on a test driver's respective feeling during straight running, lane change, and acceleration/deceleration when the FF vehicle was run at 120 km/hour by the test driver. The evaluation results were indicated as indexes with handling characteristics of a control tire (Comparative example 4) being 100, according to the following criteria, to calculate average values in the above-described three cases, and index values thereof were shown in the column of "Steering stability at high-speed running" in Table 1. The larger the index value is, the better the handling characteristics is, and the better the steering stability at high-speed running is.

(Standards for handling characteristics)

120: Better level than ever seen
110: Judged by the test driver that the performance was clearly improved
105: Felt a little better by the test driver
100: Standard
90: Felt a little worse than the standard by the test driver
80: Judged by the test driver that the performance clearly deteriorated

<Wet grip performance during high-speed running>

Each test tire was mounted on all wheels of the domestic FF vehicle with a displacement of 660 cc, and a braking distance from an initial speed of 120 km/h on a wet road surface was measured. The measurement result was indicated as an indexes by the following equation with Comparative example 1 being 100. A larger index means a better wet grip performance. Besides, a performance target value shall be 80 or more, preferably 85 or more, more preferably 90 or more, further preferably 100 or more.

$$(\text{Wet grip performance index}) = (\text{Braking distance of tire of Comparative example 4}) / (\text{Braking distance of each test tire}) \times 100$$

A performance target value shall be 101 or more, preferably 102 or more, more preferably 103 or more for a total performance of fuel efficiency, steering stability at high-speed running, and wet grip performance at high-speed running (an average value of fuel efficiency, steering stability at high-speed running, and wet grip performance at high-speed running).

Table 1-1

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| NR | 50 | 50 | 50 | 50 | 50 | 50 | 50 | 70 | 50 | 50 |
| SBR1 | 40 | 40 | 40 | 40 | - | 40 | 40 | - | 40 | 40 |
| SBR2 | - | - | - | - | 40 | - | - | 20 | - | - |
| BR | 10 | 10 | 10 | 10 | 10 | 10 | 10 | 10 | 10 | 10 |
| Carbon black | 10 | 10 | 10 | 10 | 10 | 10 | 10 | 10 | 10 | 10 |
| Silica 1 | 60 | 60 | 60 | 60 | 60 | 60 | 60 | 60 | 80 | - |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Silica 2 | - | - | - | - | - | - | - | - | - | 60 |
| Silane coupling agent | 4.8 | 4.8 | 4.8 | 4.8 | 4.8 | 4.8 | 4.8 | 4.8 | 6.4 | 4.8 |
| Resin 1 | 10 | - | - | 20 | 10 | 10 | 10 | 10 | 10 | 10 |
| Resin 2 | - | 10 | - | | | | - | | | |
| Resin 3 | - | - | 10 | | | | - | | | |
| Oil | 10 | 10 | 10 | | | 10 | 10 | 10 | 10 | 10 |
| Wax | 2.0 | 2.0 | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 | 2.0 |
| Circumferential groove area/ grounding surface area | 0.13 | 0.13 | 0.13 | 0.13 | 0.13 | 0.16 | 0.10 | 0.13 | 0.13 | 0.13 |
| Lateral groove area /grounding surface area | 0.12 | 0.12 | 0.12 | 0.12 | 0.12 | 0.14 | 0.14 | 0.12 | 0.12 | 0.12 |
| 0°C tan $\delta$ | 0.52 | 0.46 | 0.49 | 0.62 | 0.57 | 0.52 | 0.52 | 0.47 | 0.53 | 0.52 |
| -20°C tan $\delta$ | 0.77 | 0.76 | 0.70 | 0.77 | 0.82 | 0.77 | 0.77 | 0.60 | 0.70 | 0.64 |
| Value of inequality (1) | 0.26 | 0.30 | 0.21 | 0.15 | 0.25 | 0.26 | 0.26 | 0.13 | 0.17 | 0.12 |
| Indexes | | | | | | | | | | |
| Fuel efficiency | 109 | 118 | 110 | 92 | 98 | 109 | 109 | 114 | 97 | 105 |
| Steering stability at high-speed running | 102 | 101 | 103 | 105 | 104 | 101 | 102 | 103 | 120 | 110 |
| Wet grip performance | 112 | 111 | 101 | 111 | 118 | 118 | 115 | 87 | 102 | 93 |

Table 1-2

| | Comparative example | | | | |
|---|---|---|---|---|---|
| | 1 | 2 | 3 | 4 | 5 |
| Compounding amount (part by mass) | | | | | |
| NR | - | 50 | - | - | 50 |
| SBR1 | 70 | 40 | 70 | 70 | 40 |
| SBR2 | - | - | - | - | - |
| BR | 30 | 10 | 30 | 30 | 10 |
| Carbon black | 10 | 10 | 10 | 10 | 70 |
| Silica 1 | 80 | 80 | 80 | 80 | - |
| Silica 2 | - | - | - | - | - |
| Silane coupling agent | 6.4 | 6.4 | 6.4 | 6.4 | - |
| Resin 1 | - | 20 | - | - | 10 |
| Resin 2 | - | - | - | - | - |
| Resin 3 | - | - | - | - | - |
| Oil | 40 | 20 | 40 | 40 | 10 |

(continued)

| | Comparative example | | | | |
|---|---|---|---|---|---|
| | 1 | 2 | 3 | 4 | 5 |
| Compounding amount (part by mass) | | | | | |
| Wax | 2.0 | 2.0 | 2.0 | 2.0 | 2.0 |
| Antioxidant 1 | 2.0 | 2.0 | 2.0 | 2.0 | 2.0 |
| Antioxidant 2 | 1.0 | 1.0 | 1.0 | 1.0 | 1.0 |
| Stearic acid | 2.0 | 2.0 | 2.0 | 2.0 | 2.0 |
| Zinc oxide | 2.0 | 2.0 | 2.0 | 2.0 | 2.0 |
| Sulfur | 1.5 | 1.5 | 1.5 | 1.5 | 1.5 |
| Vulcanization accelerator 1 | 2.0 | 2.0 | 2.0 | 2.0 | 2.0 |
| Vulcanization accelerator 2 | 2.0 | 2.0 | 2.0 | 2.0 | 2.0 |

| | Comparative example | | | | |
|---|---|---|---|---|---|
| | 1 | 2 | 3 | 4 | 5 |
| Circumferential groove area/grounding surface area | 0.13 | 0.13 | 0.16 | 0.18 | 0.13 |
| Lateral groove area /grounding surface area | 0.12 | 0.12 | 0.14 | 0.18 | 0.12 |
| 0°C tan δ | 0.55 | 0.67 | 0.55 | 0.55 | 0.67 |
| - 20°C tan δ | 0.61 | 0.67 | 0.61 | 0.61 | 0.65 |
| Value of inequality (1) | 0.06 | 0.01 | 0.06 | 0.06 | 0.02 |
| Indexes | | | | | |
| Fuel efficiency | 100 | 82 | 100 | 100 | 79 |
| Steering stability at high-speed running | 101 | 104 | 100 | 100 | 111 |
| Wet grip performance | 88 | 96 | 94 | 100 | 94 |

From the results in Table 1, it can be found that, in the tire of the present disclosure comprising the tread formed of the rubber composition comprising an isoprene-based rubber, silica, and a rubber component and in which 0°C tan δ and -20°C tan δ are within a predetermined range, a total performance of fuel efficiency, steering stability at high-speed running, and wet grip performance at high-speed running are improved.

REFERENCE SIGNS LIST

1 Tread
11, 12, 13 Circumferential groove (circumferential main groove)
16 Outer shoulder land part
17 Inner shoulder land part
18 Outer center land part
19 Inner center land part
21 Outer shoulder lug groove
22 Inner shoulder lug groove
23 Outer shoulder sipe
24 Inner shoulder sipe
25 Outer center lug groove
26 Inner center lug groove
27 Outer center sipe
28 Inner center sipe
C Tire circumferential direction
To Outer tread end
Ti Inner tread end

W Tire width direction

## Claims

1. A tire comprising a tread formed of a rubber composition,

   wherein the rubber composition comprises an isoprene-based rubber, silica, and a resin component, and wherein a tan δ at 0°C (0°C tan δ) and a tan δ at -20°C (-20°C tan δ) satisfy a following inequality (1) under a condition of an initial strain of 2%, a dynamic strain of 1%, and a frequency of 50Hz:

$$0.1 \leq |(-20°C \tan \delta) - (0°C \tan \delta)| \leq 0.3 \quad \cdots (1).$$

2. The tire of claim 1,

   wherein the tread has circumferential grooves continuously extending in a tire circumferential direction, and lateral grooves extending in a width direction, and
   wherein an area of the circumferential groove/a grounding area is 0.09 to 0.16 and an area of a lateral groove/the grounding area is 0.08 to 0.14.

3. The tire of claim 1 or 2,
   wherein the rubber composition comprises 50 parts by mass or more of silica and 1 part by mass or more of a resin component, based on 100 parts by mass of a rubber component comprising 10% by mass or more of an isoprene-based rubber.

4. The tire of any one of claims 1 to 3,
   wherein the rubber composition comprises 50 to 150 parts by mass of silica and 1 to 50 parts by mass of a resin component, based on 100 parts by mass of a rubber component comprising 10 to 85% by mass of an isoprene-based rubber, 10 to 85% by mass of a styrene-butadiene rubber, and 5 to 50% by mass of a butadiene rubber of.

5. The tire of any one of claims 1 to 4,
   wherein the resin component comprises at least one or more selected from the group consisting of a coumarone-indene resin, an indene resin, an aromatic vinyl-based resin, and a C5-C9-based petroleum resin.

6. The tire of any one of claims 1 to 5,
   wherein the rubber composition comprises a silane coupling agent having a mercapto group.

FIG. 1

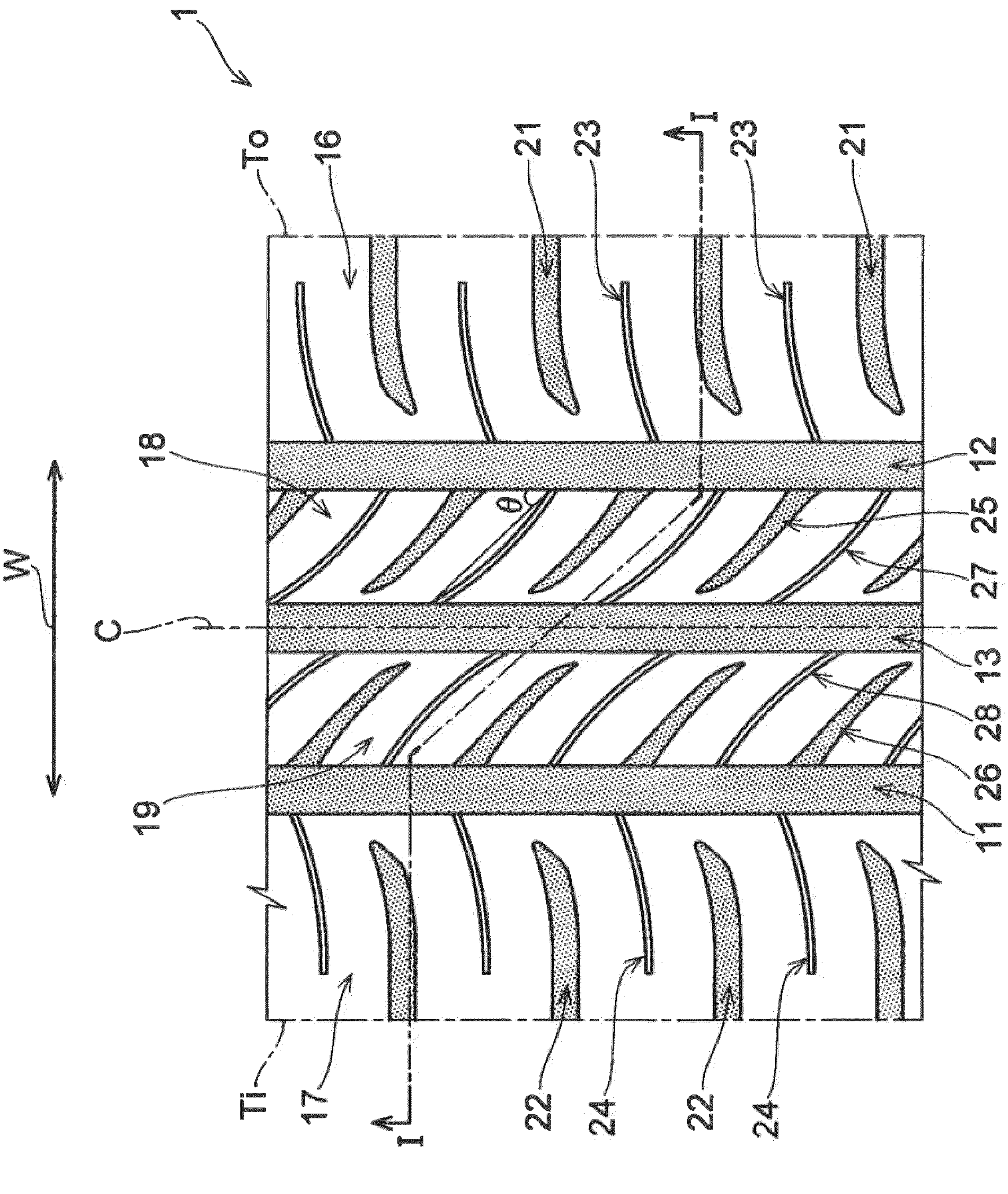

**INTERNATIONAL SEARCH REPORT**

International application No.
PCT/JP2020/038927

A. CLASSIFICATION OF SUBJECT MATTER
B60C 1/00(2006.01)i; C08K 5/548(2006.01)i; C08L 9/00(2006.01)i; C08L 25/00(2006.01)i; C08L 45/02(2006.01)i; C08L 57/02(2006.01)i; B60C 11/00(2006.01)i; B60C 11/03(2006.01)i; C08K 3/36(2006.01)i
FI: C08L9/00; C08K3/36; C08L45/02; C08L25/00; C08L57/02; C08K5/548; B60C1/00 A; B60C11/00 D; B60C11/03 Z
According to International Patent Classification (IPC) or to both national classification and IPC

B. FIELDS SEARCHED
Minimum documentation searched (classification system followed by classification symbols)
B60C1/00; C08K5/548; C08L9/00; C08L25/00; C08L45/02; C08L57/02; B60C11/00; B60C11/03; C08K3/36

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2017/126633 A1 (BRIDGESTONE CORPORATION) 27 July 2017 (2017-07-27) claims, paragraphs [0065], [0069]-[0071], examples | 1-5<br>6 |
| Y<br>A | JP 2013-159742 A (SUMITOMO RUBBER INDUSTRIES, LTD.) 19 August 2013 (2013-08-19) paragraphs [0023]-[0057] | 6<br>1-5 |
| A | JP 2018-188503 A (THE YOKOHAMA RUBBER CO., LTD.) 29 November 2018 (2018-11-29) entire text | 1-6 |
| A | JP 2010-539269 A (LANXESS DEUTSCHLAND GMBH) 16 December 2010 (2010-12-16) entire text | 1-6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 December 2020 (04.12.2020) | 22 December 2020 (22.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/038927

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-327755 A (RHEIN CHEMIE RHEINAU GMBH) 19 November 2003 (2003-11-19) entire text | 1-6 |

Form PCT/ISA/210 (continuation of second sheet) (January 2015)

**INTERNATIONAL SEARCH REPORT**
Information on patent family members

International application no.
PCT/JP2020/038927

| Patent Documents referred in the Report | Publication Date | Patent Family | Publication Date |
|---|---|---|---|
| WO 2017/126633 A1 | 27 Jul. 2017 | US 2019/0010312 A1<br>claims, paragraphs [0104], [0112]-[0117], examples<br>EP 3406664 A1<br>CN 108602987 A | |
| JP 2013-159742 A | 19 Aug. 2013 | (Family: none) | |
| JP 2018-188503 A | 29 Nov. 2018 | EP 3636455 A1<br>entire text | |
| JP 2010-539269 A | 16 Dec. 2010 | US 2011/0003932 A1<br>entire text<br>WO 2009/034001 A1<br>DE 102007044175 A<br>KR 10-2010-0066565 A<br>CN 101821328 A | |
| JP 2003-327755 A | 19 Nov. 2003 | US 2003/0195289 A1<br>entire text<br>EP 1354725 A1<br>CA 2424980 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5559234 B